Europäisches Patentamt

European Patent Office

Office européen des brevets

(19)

(11) Numéro de publication: **0 100 948**

**B1**

(12) **FASCICULE DE BREVET EUROPEEN**

(45) Date de publication du fascicule du brevet: 01.04.87

(51) Int. Cl.⁴: **C 09 D 17/00,** C 09 C 3/00

(21) Numéro de dépôt: **83107238.4**

(22) Date de dépôt: **23.07.83**

(54) Agent de broyage à base de polymères et/ou copolymères acryliques pour suspensions aqueuses de matériaux minéraux grossiers en vue d'applications pigmentaires.

(30) Priorité: **06.08.82 FR 8214030**

(43) Date de publication de la demande:
**22.02.84 Bulletin 84/08**

(45) Mention de la délivrance du brevet:
**01.04.87 Bulletin 87/14**

(84) Etats contractants désignés:
**AT BE CH DE GB IT LI NL SE**

(56) Documents cités:
**EP-A-0 046 573**
**GB-A-1 414 964**

(73) Titulaire: **Société COATEX, Société Anonyme
35 Cours Aristide Briand
F-69300 Caluire (FR)**

(72) Inventeur: **Ravet, George
La Guigonnière, rte de Lyon St. Genis les Ollières
F-69290 Craponne (FR)**
Inventeur: **Rousset, Jacky
Baneins
F-01400 Chatillon sur Chalaronne (FR)**
Inventeur: **Gonnet, Olivier
Les Douze St. Jean de Thurigneux
F-01390 St. André de Corcy (FR)**

(74) Mandataire: **Eggert, Hans-Gunther, Dr.
Räderscheidtstrasse 1
D-5000 Köln 41 (DE)**

EP 0 100 948 B1

Courier Press, Leamington Spa, England.

**0 100 948**

## Description

L'invention concerne un agent amélioré de broyage en suspension aqueuse de matériaux minéraux grossiers, constitué par des polymères et/ou copolymères acryliques partiellement acides, permettant d'obtenir une suspension aqueuse de particules minérales affinées, destinées en particulier à des applications pigmentaires de dimension inférieure à deux microns et dont au moins 75% d'entre elles ont une dimension inférieure à un micron.

L'invention concerne également l'application nouvelle dudit agent de broyage dans le procédé améloiré de préparation par broyage d'une suspension aqueuse de matériaux minéraux dont la viscosité reste stable dans le temps, assurant ainsi une grande facilité de manipulation et d'application, ledit prcédé s'appliquant particulièrement bien au broyage d'une suspension aqueuse de carbonate de calcium dont la teneur en matière sèche est d'au moins 70% en poids, dont au moins 95% des particules constitutives après broyage, ont une dimension inférieure à deux microns, tandis que 75% d'entre elles ont une dimension inférieure à un micron.

Depuis longtemps déjà, il est connu d'utiliser des substances minérales telles que les Carbonate, Sulfate et Silicate de Calcium, ainsi que le Dioxyde de Titane pour la préparation de produits industriels destinés aux domaines des Peintures, de l'enduction du Papier, des charges pour caoutchoucs et résines synthétiques, etc. . .

Mais comme ces substances minérales ne possèdent pas une structure naturelle lamellaire ou feuilletée facilitant leur délitage, comme c'est le cas de certaines substances telles que les Silicates d'Aluminium habituellement connus sous le nom de Kaolin, l'homme de l'art, doit les transformer par broyage en une suspension aqueuse de grande finesse dont les grains constitutifs ont une dimension la plus faible possible, c'est-à-dire inférieure à quelques microns, pour pouvoir les utiliser dans le domaine pigmentaire.

Par le nombre des publications faites dans ce domaine, la littérature spécialisée révèle l'importance et la complexité du broyage en milieu aqueux, de substances minérales pour obtenir une qualité partiellement affinée autorisant une application pigmentaire. C'est ainsi que dans le cas particulier de l'enduction des Papiers, il est bien connu que la masse d'enduction formée de pigments minéraux tels que les Kaolins, le Carbonate, le Sulfate de Calcium, ainsi que le Dioxyde de Titane mis en suspension dans l'eau, contient également des agents liants et dispersants ainsi que d'autres adjuvants tels que des épaississants et des agents de coloration. Or, il est souhaitable qu'une telle masse d'enduction dispose d'une viscosité faible et stable pendant la durée de l'enduction pour en faciliter la manipulation et l'application, de même qu'une teneur en matière minérale la plus élevée possible afin de diminuer la quantité d'énergie calorifique nécessaire à l'évacuation par séchage de la fraction aqueuse de la masse d'enduction. Une telle suspension, idéale, réunissant toutes ces qualités fondamentales, résoudrait pour l'homme de l'art les problèmes bien connus de broyage, de stockage, de transport du lieu de production vers le lieu d'application, enfin de transfert par pompe lors de son utilisation.

Or, il a été constaté que les techniques de broyage en milieu aqueux de substances minérales conduisaient à des suspensions instables dans le temps, en raison des effets de sédimentation des substances minérales et d'augmentation de la viscosité. C'est pourquoi l'homme de l'art s'est résigné, dans les procédés appartenant aux techniques les plus anciennes d'obtention par broyage de substances pigmentaires, à réaliser le broyage en suspension aqueuse de la substance minérale, selon une ou plusieurs opérations successives, puis à sécher et à classifier cette substance broyée en éliminant les particules insuffisamment fines, à séparer les particules minérales ayant la dimension pigmentaire souhaitée, afin d'obtenir une fine poudre minérale à faible teneur en eau. Ainsi cette fine poudre destinée aux applications pigmentaires est facilement transportable de son lieu de production vers celui de l'utilisation où elle est à nouveau mise en suspension dans l'eau pour être utilisée comme produit pigmentaire.

Dès lors, le fait de ne pas pouvoir conserver la substance minérale pigmentaire sous la forme d'une suspension aqueuse entre les opérations de broyage et d'application, a incité l'homme de l'art à poursuivre des recherches en ce domaine qui consistent en la réalisation de broyage de substances minérales en suspension aqueuse, donnant après broyage une suspension pigmentaire de viscosité faible et stable dans le temps. C'est ainsi, par exemple, qu'est proposé dans le brevet français n° 1 506 724 un procédé de préparation par broyage d'une suspension aqueous de Carbonate de Calcium, stable dans le temps, qui consiste à former sous agitation une suspension aqueuse contenant 25 à 50% en poids de Carbonate de Calcium et, à broyer cette matière aqueuse au moyen d'un corps broyant approprié, en présence d'un agent dispersant. Cet agent dispersant est un polymère acrylique soluble dans l'eau, que l'on ajoute au milieu de broyage à raison de 0,2 à 0,4% en poids du Carbonate de Calcium présent. Or, malgré l'indéniable avantage de disposer d'une suspension minérale pigmentaire de bonne stabilité dans le temps, il apparait qu'une telle suspension présente des inconvénients qui peuvent être considérés comme majeurs par l'homme de l'art. Tel est le cas, par exemple pour la teneur en matière sèche d'une telle suspension destinée au broyage qui doit être impérativement comprise entre 25% et 50% en poids et de préférence égale à environ 40% en poids. Car, dans le cas où cette concentration est inférieure à 25%, le procédé décrit est économiquement peu intéressant à cause de sa faible productivité, et dans le cas où la concentration initiale en matière sèche est supérieure à 50%, l'efficacité du procédé de broyage diminue en raison de la forte augmentation de la viscosité du milieu qui devient un empêchement à la réalisation du broyage lui-même en donnant, de ce faite, une suspension de granulométrie grossière.

Ainsi, quand la concentration en matière sèche de la suspension destinée au broyage est choisie dans le domaine de 25% à 50% en poids, la granulométrie du Carbonate de Calcium obtenue après une très longue période de broyage en présence de l'agent de dispersion peut être considérée comme favorable pour les applications pigmentaires, puisque 95% des particules ont leur plus grande dimension inférieure à deux microns.

Le fait de ne pas pouvoir pratiquer le broyage d'une suspension aqueuse de substances minérales à concentration supérieure à 50% à cause de l'augmentation brutale de la viscosité, a incité l'homme de l'art à trouver une nouvelle voie. Il a, dès lors, été proposé des procédés de mise en suspension aqueuse, et non plus de broyage, de substances minérales à haute teneur en matière sèche. Le brevet français n° 1 562 326 par exemple, relate un procédé de préparation d'une suspension aqueuse de substances minérales. Le but poursuivi par ce procédé consiste à obtenir une suspension aqueuse hautement concentrée en matière sèche et suffisamment stable pour qu'elle puisse être transportée sous cette forme depuis son lieu de fabrication jusqu'à son lieu d'exploitation. Le procédé consiste à former une suspension aqueuse·de matières minérales contenant de 70 à 85% en poids de matière sèche dont au moins 99% en poids des particules initiales ont une dimension inférieure ou égale à 50 microns, puis à agiter la dite suspension en présence d'un agent dispersant qui peut être un sel de Sodium ou de Potassium d'un acide poly-phosphorique, d'un acide polyacrylique, d'un acide polysilicique, etc. . ., obtenu par leur neutralisation complète au moyen d'un hydroxyde de sodium ou de potassium. Puis cet agent dispersant est introduit à raison de 0,05% à 0,5% en poids par rapport au poids de matière sèche de la dite suspension. L'auteur constate que la teneur en matière sèche de la suspension ne devait pas être supérieure à 85% en poids en raison de la forte augmentation de sa viscosité et ne pouvait pas être inférieure à 70% en poids sans provoquer une sédimentation préjudiciable.

Ainsi, l'art antérieure propose à l'homme de l'art des solutions qui ne peuvent pas le satisfaire pleinement.

L'une de ces solutions concerne le broyage en présence d'un agent dispersant, d'une suspension aqueuse de Carbonate de Calcium trop peu concentrée en matière sèche pour être intéressante, bien qu'elle ait l'avantage de produire une suspension pigmentaire de faible viscosité et bien affinée, donnant jusqu'à 95% de particules de dimension inférieure à deux microns.

L'autre de ces solutions concerne la préparation d'une suspension aqueuse à haute teneur en matière sèche, contenant 70% à 85% en poids de matériaux minéraux dont 99% des particules initiales ont une dimension inférieure ou égale à 50 microns, en introduisant dans le milieu un agent dispersant permettant de stabiliser ces particules. Mais ce procédé, bien que fournissant une suspension de·faible viscosité, ne peut être retenu car la dimension des particules minérales constitutives est trop irrégulière et grossière pour les applications pigmentaires.

Comme les procédés préconisés par la littérature spécialisée ne répondaient pas aux exigences des utilisateurs de disposer de suspension aqueuse pigmentaire qui soit simultanément concentrée en matière sèche, de grande finesse et de viscosité faible et stable dans le temps, la demanderesse à la suite de nombreuses recherches a déjà proposé, dans le brevet français 2 488 814, un nouvel agent de broyage de substances minérales en milieu auqeux, permettant d'obtenir une suspension pigmentaire possédant les qualités souhaitées par l'applicateur. Cet agent de broyage, formé de polymères et/ou copolymères acryliques alcalins, est constitué par la seule fraction de ces polymères et/ou copolymères acryliques alcalins dont la viscosité spécifique se situe entre 0,3 et 0,8.

En effet, comme l'art antérieur l'avait exprimé, il était bien connu d'utiliser les polymères et/ou copolymères acryliques alcalins comme agent de dispersion des substances minérales en suspension aqueuse, mais non comme agent de broyage. Pour ce faire, ces polymères et/ou copolymères acryliques alcalins sont préparés selon des procédés connus, par polymérisation radicalaire de l'acide acrylique en présence de régulateurs de polymérisation tels que par exemple des composés organiques à base d'Hydroxylamine et en présence d'initiateurs de polymérisation tels que les Peroxydes et les Persels, par exemple l'Eau Oxygénée, les Persulfates, etc . . . et en opérant une neutralisation du polymérisat. Puis ce polymérisat est alors introduit en quantité adéquate dans la suspension aqueuse de matières minérales soumise à une agitation afin de favoriser la dispersion de la charge minérale.

Or, lors de ses recherches, la demanderesse souhaitant réaliser un broyage amélioré des matériaux minéraux en suspension aqueuse a tenté d'utiliser un tel polymérisat comme "agent de broyage" en l'introduisant dans la suspension des substances minérales contenant au moins 50% en poids de matières sèches, pourcentage qui avait été précisé dans l'art antérieur comme charge limite à ne pas dépasser et elle a alors observé que la suspension ainsi préparée et soumise à broyage devenait hautement visqueuse, de telle sorte qu'il s'avérait inopérant dans ces conditions, de broyer ou même de disperser d'une manière satisfaisante les matériaux minéraux.

Forte de cette constatation, la Demanderessse a alors recherché d'une manière approfondie, les causes fondamentales de l'augmentation de la viscosité, au cours de l'opération de broyage, de la suspension aqueuse de matériaux minéraux, hautement concentrée en matière sèche et a observé que l'augmentation de la viscosité de la suspension était conditionnée par la viscosité spécifique moyenne des polymères et/ou copolymères acryliques alcalins utilisés comme agents de broyage et de viscosité spécifique moyenne inférieure à 0,8. Dès lors, en pratiquant de nombreuses opérations de broyage de suspensions aqueuses, hautement chargées en matériaux minéraux, la Demanderesse a pu établir que la seule fraction des polymères et copolymères acryliques alcalins qui possède les qualités fondamentales d'un agent de broyage, est celle dont la viscosité spécifique se situe entre 0,3 et 0,8. Un tel agent de broyage décrit dans le brevet français 2 488 814 offre un progrès important à l'égard de l'art antérieur jusqu' alors connu, puisque cette fraction de polymères et/ou copolymères acryliques alcalins autorise la transformation par broyage en suspension aqueuse à haute concentration en matière sèche, de substances minérales grossières en des particules très fines dont 95% d'entre elles ont une dimension inférieure à deux microns et dont 75% au moins d'entre elles ont une dimension inférieure à un micron, mains également l'obtention d'une suspension de substances minérales très fines dont la viscosité est beaucoup plus faible que celle obtenue par l'usage des adjuvants préconisés dans l'art antérieur.

Toutefois il a été constanté, malgré les améliorations considérables apportées par cet agent de broyage, que la viscosité des suspensions de particules minérales très fines, résultant du broyage en présence de cet agent, n'était pas absolument stable dans le temps, cette viscosité après huit jours de repos par exemple, pouvant être de deux à cinq fois supérieure à celle mesurée sur ces mêmes suspensions, dès leur sortie du broyage.

Dés lors que les procédés préconisés, ne répondaient pas aux exigences des utilisateurs, de disposer d'une suspension aqueuse pigmentaire qui soit simultanément concentrée en matière sèche, de grande finesse et de viscosité faible et stable dans le temps, la Demanderesse poursuivant ses recherches a trouvé et mis au point un agent de broyage des substances minérales, en milieu aqueux, permettant d'obtenir une suspension pigmentaire possédant les qualités souhaitées tout en éliminant les inconvénients précités.

Selon l'invention, l'agent de broyage en suspension aqueuse de matériaux minéraux grossiers, destinés à des applications pigmentaires contenant une fraction des polymères et/ou copolymères acryliques acides, ayant une viscosité spécifique η comprise entre 0,3 et 0,8, ladite viscosité étant mesurée sur le polymère et/ou le copolymère complètement neutralisé, se caractérise en ce qu'il est formé de ladite fraction des polymères et/ou copolymères partiellement neutralisés jusqu'à un taux de neutralisation compris entre 0,40 et 0,96 par au moins un agent de neutralisation disposant d'au moins une fonction monovalente.

Il est apparu, en effet à la demanderesse lors des multiples essais de broyage qu'elle a été amenée à effectuer en présence d'un agent de broyage, qu'il était possible de réaliser des suspensions aqueuses pigmentaires, simultanément concentrées en matière sèche, de grande finesse, de viscosité faible et également très stable dans le temps, cette stabilité étant une amélioration substantielle à l'égard des résultats acquis dans l'art antérieur, à condition que ledit agent de broyage soit constitué par des polymères et/ou copolymères acryliques partiellement neutralisés.

La GB—A—1 414 964 décrit, entre autres, l'utilisation de polymères acryliques sous forme de sels de sodium en tant qu'agent de défloculation. Exception faite de l'autre but d'usage, ces copolymères sont complètement neutralisés par opposition à l'invention. Ils sont apparemment mal appropriés en tant qu'agent de broyage, comme le montre une comparaison des exemples 6 et 10 avec les tableaux II et V en faisant partie. Dans les deux cas, on met entre autres en oeuvre le sel de sodium du copolymère de vinylacétate et d'acide maléique selon l'exemple 3. En tant qu'agent de défloculation dans une dispersion de kaolin, la viscosité reste pratiquement inchangée pour une concentration de matériaux minéraux de 70% en poids, même après 7 jours de stockage. Dans le cas de l'exemple 10 pour le broyage de la craie, on observe, avec le même copolymère complètement neutralisé selon l'exemple 3 et avec une concentration en matériaux minéraux comparable de 72% selon le tableau V, une forte augmentation de la viscosité de 180 à'origine à 730 cp après 7 jours de stockage.

Les fractions de polymères choisis selon l'invention et seulement partiellement neutralisés donnent en tant qu'agent de broyage, immédiatement après le broyage, dans la majorité des cas, des viscosités inférieures ou à peu près du même niveau (essais 3, 4, 6, 8, 9, 10, 11 et 13) que dans le meilleur des cas de la référence opposée pour une même concentration en matériaux minéraux. Après 8 jours de stockage, les viscosités des agents de broyage selon l'invention sont à peu près les mêmes ou en partie inférieures (essais 4, 9 et 11) que les valeurs mesurées immédiatement après le broyage.

Les polymères et/ou copolymères acryliques destinés à être utilisés comme agent de broyage selon l'invention résultent de la polymérisation de l'un au moins des monomèresau comonomères suivants: acide acrylique et/ou méthacrylique, itaconique, crotonique, fumarique, anhydride, maléique ou encore, isocrotonique, aconitique, mésaconique, sinapique, undecylénique, angélique, hydroxyacrylique, l'acroléine, l'acrylamide, l'acrylonitrile, les esters des acides acryliques et méthacryliques et en particulier le méthacrylate de diméthylaminoéthyle, les imidazoles, vinylpyrolidone, vinylcaprolactame, l'éthylène, le propylène, l'insobutylène, le diisobutylène, l'acétate de vinyle, le styrène, l'alphaméthylstyrène, la méthyl-vinylcétone, polymérisation selon les procédés connus en milieu aqueux, alcoolique, hydroalcoolique, aromatique ou aliphatique.

Ainsi le milieu de polymèrisation peut être l'eau, le méthanol, l'éthanol, le propanol, l'isopropanol, les butanols, ou encore le diméthylformamide, le diméthylsulfoxyde, le tétrahydrofurane, l'acétone, la méthyl-éthylcétone, l'acétate d'éthyle, l'acétate de butyle, l'héxane, l'heptane, le benzène, le toluène, le xylène, le mercaptoéthanol, le tertiododécylmercaptan, l'acide thioglycolique et ses esters, le n'dodécylmercaptan, les acides acétique, tartrique, lactique, citrique, gluconique, glucoheptonique, l'acide 2 mercapto-

4

**0 100 948**

propionique, le thiodiéthanol, les solvants halogénés comme le tétrachlorure de carbone, le chloroforme, le chlorure de méthylène, le chlorure de méthyle, les éthers de monopropylèneglycol, diéthylèneglycol.

Les polymères et/ou copolymères acryliques destinés à être utilisés comme agent de broyage selon l'invention ont généralement une viscosité spécifique au plus égale à 25 et de préférence au plus égale à 10. Ces polymères résultent comme cela a déjà été dit, de la polymérisation qui se pratique selon des procédés connus, en présence des initiateurs et régulateurs bien connus de l'homme de l'art.

Dès la fin de la polymérisation, la solution du polymérisat obtenu est partiellement neutralisée au moyen d'un agent de neutralisation approprié.

L'agent de neutralisation dispose au moins d'une fonction monovalente, c'est-à-dire qu'il peut disposer d'une fonction monovalente ou d'une fonction polyvalente ou bien simultanément d'au moins deux fonctions monovalentes et d'au moins deux fonctions polyvalentes.

En particulier, l'agent de neutralisation, peut être souhaitablement constitué par le mélange d'au moins un agent de neutralisation disposant d'au moins une fonction monovalente avec au moins un agent de neutralisation disposant d'une fonction polyvalente.

Quand l'agent de neutralisation dispose d'une fonction monovalente, il appartient au groupe constitué par les cations alcalins, en particulier le sodium et le potassium, ou encore l'ammonium, ou bien les amines primaires, secondaires ou tertiaires alyphatiques et/ou cycliques telles que par exemple les éthanolamines (mono, di, triéthanolamine), la mono et diéthylamine, la cyclohexylamine, la méthylcyclohexylamine.

Quand l'agent de neutralisation dispose d'une fonction polyvalente, il appartient au groupe constitué par les cations alcalino terreux, en particulier, le magnésium et le calcium, ou encore le zinc et l'aluminium.

Le taux de neutralisation partielle des cites actifs du polymérisat en solution, conduisant à l'agent de broyage selon l'invention, est au plus de 0,98, généralement compris entre 0,40 et 0,96 et préférentiellement choisi entre 0,50 et 0,75.

Il est évident et la demanderesse l'a vérifié, que le taux de neutralisation partielle des sites acides peut être obtenu, par équivalence, par mélange de fractions appropriées de polymères et/ou copolymères totalement neutralisés et complètement acides.

Selon une variante, les polymères et/ou copolymères acryliques, destinés être utilisés comme agent de broyage selon l'invention peuvent être constitués par la seule fraction de ces polymères et/ou copolymères partiellement neutralisés dont la viscosité spécifique se situe entre 0,3 et 0,8.

Dans ce cas, la fraction du polymère et/ou copolymère acrylique de viscosité spécifique comprise entre 0,3 et 0,8 destinée à être utilisée comme agent de broyage est généralement isolée et extraite de la solution qui résulte de la polymérisation de l'un au moins des monomères précités selon les procédés connus. Dès la fin de la polymérisation qui s'est pratiquée en présence des initiateurs et régulateurs bien connus de l'homme de l'art, la solution du polymérisat obtenu est partiellement neutralisée par au moins un agent de neutralisation disposant d'au moins une fonction monovalente, comme cela a déjà été décrit.

La solution du polymérisat ainsi neutralisé est ensuite traitée selon les procédés connus de l'homme de l'art, par un solvant polaire appartenant au groupe constitué par le Méthanol, l'Ethanol, le Propanol, l'Isopropanol, l'Acétone, le Tétrahydrofurane. Dés lors, il se produit une séparation en deux phases. La phase la moins dense, comportant la majeure fraction du solvant polaire et la fraction de polymère et/ou copolymère acrylique indésirable, est éliminée tandis que la phase aqueuse la plus dense est recueillie et contient la fraction des polymères et/ou copolymères acryliques alcalins dont la viscosité spécifique est comprise entre 0,3 et 0,8.

Il est également possible et souhaitable dans certains cas d'affiner encore la sélection de la fraction des polymères et/ou copolymères acryliques alcalins en traitant à nouveau la phase aqueuse la plus dense précédemment recueillie, au moyen d'une nouvelle quantité de solvant polaire, qui peut être différent de celui initialement utilisé, ou qui peut encore être un mélange de solvants polaires. Il apparait à nouveau deux phases dont la plus dense, la phase aqueuse, est recueillie et constitue une fraction des polymères et/ ou copolymères acryliques partiellement neutralisés dont la viscosité spécifique se situe dans un domaine plus étroit. En pratique, il s'est révélé intéressant de sélectionner la fraction des polymères et/ou copolymères acryliques partiellement neutralisés dont la visocité spécifique est comprise entre 0,35 et 0,70.

En pratique, le phase liquide résultant de la polymérisation et contenant les polymères et/ou copolymères acryliques, partiellement neutralisée, peut être utilisée sous cette forme comme agent de broyage des substances minérales à porphyriser mais elle peut également être traitée par tous moyens connus, pour en éliminer cette phase et isoler les polymères et/ou copolymères acryliques partiellement neutralisé sous la forme d'une fine poudre qui peut être utilisée sous cette autre forme comme agent de broyage.

Dans le cas de la variante, la température à laquelle s'effectue le traitement de sélection de la fraction de polymère et/ou copolymère acrylique partiellement neutralisée n'est pas critique par elle-même, puisqu'elle influence le seul coefficient de partage. En pratique ce traitement de sélection s'effectue à la température ambiante, mais il n'est pas exclu de le réaliser à des températures plus élevées.

La viscosité spécifique des polymères et/ou copolymères acryliques, qui est symbolisée par la lettre "$\eta$" est déterminée de la manière suivante:

On prépare une solution de polymère et/ou copolymère acrylique neutralisé à 100% (taux de neutralisation = 1) par la Soude pour la mesure, par dissolution de 50 g sec du polymère et/ou copolymère dans un litre d'une solution d'eau distillée contenant 60 g de NaCl. Puis on mesure avec un viscosimètre capillaire de constante de Baume égale à 0,000105 placé dans un bain thermostaté à 25°C, le temps d'écoulement d'un volume donné de la solution précitée contenant le polymère et/ou copolymère acrylique alcalin, ainsi que le temps d'écoulement du même volume de solution aqueuse de Chlorure de Sodium dépourvue dudit polymère et/ou copolymère. Il est alors possible de définir la viscosité ''$\eta$'' grâce à la relation suivante:

$$\eta = \frac{(\text{temps d'écoulement de la solution de polymère}) - (\text{temps d'écoulement de la solution NaCl})}{\text{temps d'écoulement de la solution NaCl}}$$

Le tube capillaire est généralement choisi de telle manière que le temps d'écoulement de la solution de NaCl, dépourvue de polymère et/ou copolymère, soit d'environ 90 à 100 secondes, donnant ainsi des mesures de viscosité spécifique d'une très bonne précision.

L'opération de broyage de la substance minérale à affiner consiste à broyer la substance minérale avec un corps broyant en particules très fines dans une milieu aqueux contenant l'agent de broyage.

En pratique, on forme une suspension aqueuse de la substance minérale à broyer, dont les grains ont une dimension initiale au plus égale à 50 microns, en une quantité telle que la concentration en matière sèche de ladite suspension est d'au moins 70% en poids.

A la suspension de la substance minérale à broyer on ajoute le corps broyant de granulométrie avantageusement comprise entre 0,20 millimètre et 4 millimètres. Le corps broyant se présente en général sous la forme de particules de matériaux aussi divers que l'Oxyde de Silicium, l'Oxyde d'Aluminium, L'Oxyde de Zirconium ou de leurs mélanges ainsi que les résines synthétiques de haute dureté, les aciers, etc...

Un exemple de composition de tels corps broyants est donné part le brevet français 2 203 681 qui décrit des éléments broyants formés de 30 à 70% en poids d'Oxyde de Zirconium, 0,1 à 5% d'Oxyde d'Aluminium et de 5 à 20% d'Oxyde de Silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage telle que celle qui se produit dans un broyeur classique à microéléments.

L'agent de broyage constitué par le polymère et/ou copolymère acrylique partiellement neturalisé est également introduit au sein du mélange formé par la suspension aqueuse de substances minérales et par le corps broyant à raison de 0,2 à 2% en poids de la fraction séchée desdits polymères par rapport à la masse de la substance minérale à affiner.

Le temps nécessaire pour aboutir à une excellente finesse de la substance minérale après broyage varie selon la nature et la quantité des substances minérales à porphyriser et selon le mode d'agitation utilisé et la température du milieu pendant l'opération de broyage.

Les substances minérales à affiner selon le procédé de l'invention peuvent être d'origine très diverses telles que le Carbonate de Calcium et les Dolomies, le Sulfate de Calcium, le Kaolin, le Dioxyde de Titane, c'est-à-dire, toutes les substances minérales qui doivent être broyées pour être utilisables dans des applications aussi diversifiées que l'enduction des papiers, la pigmentation des peintures et enduits, la charge des caoutchoucs ou résines synthétiques, la matification des textiles synthétiques, etc...

Ainsi l'application de l'agent de broyage selon l'invention autorise la transformation par broyage en suspension aqueuse de haute concentration en matière sèche, de substances minérales grossières en des particules très fines dont 95% d'entre elles ont une dimension toujours inférieure à deux microns, et dont 75% au moins d'entre elles ont une dimension inférieure à un micron et d'obtenir une suspension de substances minérales très fines dont la viscosité est faible et stable dans le temps.

Exemple 1

Cet exemle dont le but est d'illustrer l'art antérieur concerne le broyage du Carbonate de Calcium en présence d'un agent de broyage qui est un Polyacrylate de Sodium obtenus par polymérisation de l'Acide Acrylique en présence d'initiateurs et de régulateurs selon deux procédés connus de l'homme de l'art.

Un premier essai concerne le broyage du Carbonate de Calcium en présence de Polyacrylate de Sodium obtenu par polymérisation radicalaire de l'Acide Acrylique dans l'eau, suivie d'une neutralisation complète par l'Hydroxyde de Sodium.

Un deuxième essai concerne la broyage du Carbonate de Calcium en présence de Polyacrylate de Sodium obtenu par polymérisation radicalaire de l'Acide Acrylique en milieu aqueux, en présence d'Isopropanol, suivie d'une distillation de l'alcool et d'une neutralisation complète par l'Hydroxyde de Sodium du polymérisat.

Ces deux essais ont été exécutés selon les mêmes critères expériementaux, en effectuante le broyage dans le même appareillage, afin que les résultats obtenus puissent être comparés.

Pour chaque essai, on a préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

6

**0 100 948**

L'agent de broyage était introduit dans cette suspension selon les quantités indiquées dans le tableau ci-après, exprimées en pour cent en poids sec par rapport à la masse de Carbonate de Calcium à broyer.

La suspension circulait dans une broyeur du type Dyno-Mill à cyclindre fixe et impulseur tournant dont le corps broyant était constitué par des billes de corindon de diamètre compris dans l'intervalle 0,5 millimètre à 1,6 millimètres.

Le volume total occupé par le corps broyant était de 1150 centimètres cubes tandis que sa masse était de 3040 g.

La chambre de broyage avait un volume de 1400 centimètres cubes.

La vitesse circonférentielle du broyeur était de 10 mètres par secondes.

La suspension de Carbonate de Calcium était recyclée à raison de 18 litres par heure.

La sortie du broyeur Dyno-Mill était munie d'un séparateur de mailles 200 microns permettant de séparer la suspension résultant du broyage et le corps broyant.

La température lors de chaque essai de broyage était maintenue à 65°C.

Le temps de broyage dans les conditions d'expérimentation précitées était compris entre 60 et 100 minutes et exprimait le temps nécessaire pour l'obtention d'une substance minérale broyée dont au moins 75% des particules avaient une dimension inféreiure à un micron.

A la fin du broyage, la viscosité de la suspension pigmentaire était mesurée à l'aide d'un viscosimètre Brookfield, à une température de 20°C et une vitesse de rotation de 100 tours par minute avec le mobile n° 3.

Après un temps de repos de 24 heures et de 8 jours, la viscosité de la suspension était à nouveau mesurée après une brève agitation.

Tous les résultats expérimentaux sont consignés dans le tableau 1.

| TABLEAU 1 | | ESSAI 1 | ESSAI 2 |
|---|---|---|---|
| Substance minérale à broyer | - | $CaCO_3$ (urgonite) | $CaCO_3$ (urgonite) |
| Concentration en matière sèche de la suspension soumise au broyage | | 76% | 76% |
| Agent de broyage<br><br>Taux de neutralisation | | Polyacrylate de Sodium 1 (100%) | Polyacrylate de Sodium 1 (100%) |
| Milieu de polymérisation | | eau | eau et isopropanol |
| Viscosité spécifique de l'agent de broyage | | 0,58 | 0,54 |
| Consommation en agent de broyage en poids sec/sec | | 1,33 | 1,04 |
| pH du milieu de broyage | | 9,2 | 9,2 |
| % substances minérales à 1 micron en fin de broyage | | 78 | 78 |
| Température de broyage maintenue à: | | 65°C | 65°C |
| Viscosité en cps à 20°C<br>—à la sortie du broyage | | 850 | 500 |
| —après 24h de repos agitation préalable à la mesure | | 1280 | 800 |
| —après 8h jours de repos agitation préalable à la mesure | | 3600 | 1520 |

Le tableau révèle que la viscosité de la suspension sortant du broyage est élevée et que cette viscosité est instable dans le temps quelque soit sa valeur initiale, puisqu'elle augmente d'une manière importante par repos de la suspension.

7

# 0 100 948

Exemple 2

Cet exemple, destiné à illustrer l'objet de l'invention concerne le broyage du même Carbonate de Calcium utilisé dans l'exemple 1, en présence d'un agent de broyage qui est un acide polyacrylique partiellement neutralisé, obtenu par polymérisation de l'Acide Acrylique selon les mêmes procédés que ceux pratiqués pour les essais 1 et 2 de l'exemple 1.

Dans un essai n° 3, le broyage du Carbonate de Calcium a été réalisé en présence de l'acide polyacrylique obtenu comme dans l'essai n° 1 de l'exemple 1, par polymérisation radicalaire de l'Acide Acrylique dans l'eau et neutralisation partielle du polymérisat selon un taux de 0,66 par de l'Hydroxyde de sodium.

Dans un essai n° 4, le broyage du Carbonate de Calcium a été pratiqué en présence de l'acide polyacrylique obtenu selon le procédé de l'essai n° 2 de l'exemple 1, par polymérisation radicalaire de l'Acide Acrylique en un milieu aqueux en présence d'Isopropanol et neutralisation partielle du polymérisat par de l'Hydroxyde de Sodium selon un taux de 0,66.

Pour chacun des essais 3 et 4, on a alors préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 2 ci-apprès, exprimées en pour cent en poids par rapport à la masse de Carbonate de Calcium à broyer.

La suspension à broyer était placée dans le même broyeur que dans l'exemple 1, avec la même quantité de cros broyant et était traitée selon les mêmes critères expérimentaux, afin que les résultats obtenus puissent être comparés à ceux de l'exemple 1.

Tous les résultats expérimentaux sont consignés dans le tableau 2 ci-après.

| TABLEAU 2 | ESSAI 3 | ESSAI 4 |
|---|---|---|
| Substance minérale à broyer | $CaCO_3$ (urgonite) | $CaCO_3$ (urgonite) |
| Concentration en matière sèche de la suspension soumise au broyage | 76% | 76% |
| Agent de broyage<br><br>Taux de neutralisation | Acide-Polyacrylique 0,66 | Acide-Polyacrylique 0,66 |
| Milieu de polymérisation | eau | eau et isopropanol |
| Viscosité spécifique de l'agent de broyage | 0,58 | 0,54 |
| Consommation en agent de broyage en % en poids sec/sec | 1,54 | 1,25 |
| pH du milieu de broyage | 9,2 | 9,2 |
| % substances minérales à 1 micron en fin de broyage | 78 | 79 |
| Température de broyage maintenue à: | 65°C | 65°C |
| Viscosité en cps à 20°C<br>—à la sortie du broyage<br>—après 24h de repos agitation préalable à la mesure<br>—après 8h jours de repos agitation préalable à la mesure | 460<br><br>450<br><br>470 | 330<br><br>300<br><br>320 |

Ce deuxième tableau révèle, par comparaison avec le tableau de l'exemple 1, l'extraordinaire diminution de la viscosité de la suspension de Carbonate de Calcium provenant d'une opération de broyage selon l'invention, c'est-à-dire réalisée en présence d'un agent de broyage constitué par du polymère acrylique partiellement neutralisé au moyen de l'hydroxyde de sodium, c'est-à-dire par au moins un agent de neutralisation disposant d'au moins une fonction monovalente.

8

Ce deuxième tableau révèle aussi l'importante amélioration de la viscosité de la suspension de Carbonate de Calcium grâce à la comparaison des essais 1 et 3 et 2 et 4 aussi bien immédiatement à la sortie du broyage qu'après 24 heures et 8 jours de repos.

Grâce à l'agent de broyage selon l'invention, les suspensions de Carbonate de Calcium à haute concentration en matière sèche, acquièrent après broyage une viscosité très faible et stable dans le temps.

Exemple 3

Cet exemple, destiné à illustrer l'objet de l'invention, concerne le broyage du même Carbonate de Calcium utilisé dans l'exemple 1, en présence d'un agent de broyage qui est un acide polyacrylique obtenu par polymérisation de l'acide acrylique selon le procédé pratiqué pour l'essai 2 de l'exemple 1 et neutralisation du polymérisat par l'hydroxyde de potassium.

Dans un essai n° 5, qui illustre l'art antérieur, le broyage du Carbonate de Calcium a été réalisé en présence de Polyacrylate de Potassium obtenu comme dans l'essai n° 2 de l'exemple 1, par polymérisation radicalaire de l'Acide Acrylique en un milieu aqueux, en présence d'isopropanol et neutralisation complète du polymérisat par de l'Hydroxyde de potassium.

Dans un essai n° 6 qui illustre l'invention, le broyage du Carbonate de Calcium a été pratiqué en présence d'acide polyacrylique obtenu selon le procédé de l'essai n° 2 de l'exemple 1, par polymérisation radicalaire de l'Acide Acrylique en un milieu aqueux en présence d'Isopropanol et neutralisation partielle du polymérisat par de l'Hydroxyde de Potassium, selon un taux de 0,66.

Pour chacun des essais 5 et 6, on a alors préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 3 ci-après, exprimées en pour cent en poids par rapport à la masse de Carbonate de Calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

| TABLEAU 3 | ESSAI 5 | ESSAI 6 |
|---|---|---|
| Substance minérale à broyer | $CaCO_3$ (urgonite) | $CaCO_3$ (urgonite) |
| Concentration en matière sèche de la suspension soumise au broyage | 76% | 76% |
| Agent de broyage<br>Taux de neutralisation | Polyacrylate de Potassium<br>1 | Acide Polyacrylique<br>0,66 |
| Milieu de polymérisation | eau et isopropanol | eau et isopropanol |
| Viscosité spécifique de l'agent de broyage | 0,54 | 0,54 |
| Consommation en agent de broyage en % en poids sec/sec | 1,15 | 1,38 |
| pH du milieu de broyage | 9,2 | 9,2 |
| % substances minérales à 1 micron en fin de broyage | 79 | 79 |
| Température de broyage maintenue à: | 65°C | 65°C |
| Viscosité en cps à 20°C<br>—à la sortie du broyage<br>—après 24h de repos agitation préalable à la mesure<br>—après 8h jours de repos agitation préalable à la mesure | 610<br>1260<br>2100 | 420<br>400<br>500 |

**0 100 948**

L'essai 6 révèle, par comparaison avec l'essai 5 et avec le tableau de l'exemple 1, l'extraordinaire diminution de la viscosité de la suspension de Carbonate de Calcium provenant d'une opération de broyage selon l'invention, c'est-à-dire réalisée en présence d'un agent de broyage constitué par du polymère acrylique partiellement neutralisé par KOH, diminution de la viscosité aussi bien immédiatement à la sortie du broyage qu'après 24 heures et 8 jours de repos.

Grâce à l'agent de broyage selon l'invention, les suspensions de Carbonate de Calcium à haute concentration en matière sèche, acquièrent après broyage une viscosité très faible et stable dans le temps.

Exemple 4

Cet exemple, destiné à illustrer l'objet de l'invention concerne le broyage du même Carbonate de Calcium utilisé dans l'exemple 1, en présence d'un agent de broyage qui est un Acide Polyacrylique obtenu par polymérisation de l'Acide Acrylique selon les mêmes procédés que ceux pratiqués pour l'essai 2 de l'exemple 1 et neutralisation par l'Hydroxyde d'Ammonium.

Dans un essai n° 7, le broyage du Carbonate de Calcium a été réalisé en présence de Polyacrylate d'Ammonium obtenu comme dans l'essai n° 2 de l'exemple 1, par polymérisation radicalaire de l'acide acrylique en un milieu aqueux, en présence d'isopropanol et neutralisation complète du polymérisat par l'hydroxyde d'ammonium.

Dans un essai n° 8, qui illustre l'invention, le broyage du Carbonate de Calcium a été pratiqué en présence d'acide polyacrylique obtenu selon le procédé de l'essai n° 2 de l'exemple 1, par polymérisation radicalaire de l'acide acrylique en un milieu aqueux en présence d'isopropanol et neutralisation partielle du polymérisat par de l'hydroxyde d'ammonium selon un taux de 0,66.

Pour chacun des essais 7 et 8 on a alors préparé une suspension selon les quantités indiquées dans le tableau 4 ci-après, exprimées en pour cent en poids par rapport à la masse de Carbonate de Calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 4 ci-après.

| TABLEAU 4 | ESSAI 7 | ESSAI 8 |
|---|---|---|
| Substance minérale à broyer | CaCO$_3$ (urgonite) | CaCO$_3$ (urgonite) |
| Concentration en matière sèche de la suspension soumise au broyage | 76% | 76% |
| Agent de broyage<br><br>Taux de neutralisation | Polyacrylate d'Ammonium<br>1 | Acide Polyacrylique<br>0,66 |
| Milieu de polymérisation | eau et isopropanol | eau et isopropanol |
| Viscosité spécifique de l'agent de broyage | 0,54 | 0,54 |
| Consommation en agent de broyage en % en poids sec/sec | 1,4 | 1,6 |
| pH du milieu de broyage | 9,2 | 9,2 |
| % substances minérales à 1 micron en fin de broyage | 78 | 78 |
| Température de broyage maintenue à: | 65°C | 65°C |
| Viscosité en cps à 20°C<br>—à la sortie du broyage<br>—après 24h de repos agitation préalable à la mesure<br>—après 8h jours de repos agitation préalable à la mesure | 650<br><br>1100<br><br>1800 | 540<br><br>510<br><br>550 |

10

L'esai 8 révèle, par comparaison avec l'essai n° 7 et avec le tableau de l'exemple 1, l'extraordinaire diminution de la viscosité de la suspension de Carbonate de Calcium provenant d'une opération de broyage selon l'invention, c'est-à-dire réalisée en présence d'un agent de broyage constitué par du polymère acrylique partiellement neutralisé par de l'hydroxyde d'ammonium, diminution de la viscosité aussi bein immédiatement à la sortie du broyage qu'après 24 heures et 8 jours de repos.

Exemple 5

Cet exemple, destiné à illustrer l'objet de l'invention concerne le broyage du même Carbonate de Calcium utilisé dans l'exemple 1, en présence d'un agent de broyage qui est un acide polyacrylique, obtenu par polymérisation de l'acide acrylique selon les mêmes procédés que ceux pratiqués pour l'essai 2 de l'exemple 1 et neutralisation par le mélange d'au moins un agent de neutralisation disposant d'au moins une fonction monovalente avec au moins un agent de neutralisation disposant d'une fonction polyvalente.

Dans un essai n° 9, le broyage du Carbonate de Calcium a été réalisé en présence d'acide polyacrylique obtenu comme dans l'essai n° 2 de l'exemple 1, par polymérisation radicalaire de l'acide acrylique dans l'eau en présence d'isopropanol et neutralisation du polymérisat par un mélange d'hydroxydes, au taux de 0,46 pour l'hydroxyde de sodium et de 0,20 pour l'hyroxyde de calcium.

Dans un essai n° 10, le broyage du Carbonate de Calcium a été pratiqué en présence d'acide polyacrylique obtenu selon la procédé de l'essai n° 2 de l'exemple 1, par polymérisation radicalaire de l'acide acrylique en un milieu aqueux en présence d'isopropanol et neutralisation du polymèrisat par un mélange d'hydroxydes, aux taux de 0,61 pour l'hydroxyde de potassium et de 0,05 pour l'hydroxyde d'aluminium.

Pour chacun des essais 9 et 10, on a alors préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

L'agent de broyage était introduit dans cette suspension selon les quantités indiquées dans le tableau 5 ci-après, exprimées en pour cent en poids par rapport à la masse de Carbonate de Calcium à broyer.

La suspension à broyer était placée dans la même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 5 ci-après.

0 100 948

| TABLEAU 5 | ESSAI 9 | ESSAI 10 |
|---|---|---|
| Substance minérale à broyer | $CaCO_3$ (urgonite) | $CaCO_3$ (urgonite) |
| Concentration en matière sèche de la suspension soumise au broyage | 76% | 76% |
| Agent de broyage<br><br>Taux de neutralisation | Acide Polyacrylique 0,46 NaOH + 0,20 CaO | Acide Polyacrylique 0,61 KOH + 0,05 $Al_2O_3$ |
| Milieu de polymérisation | eau et isopropanol | eau et isopropanol |
| Viscosité spécifique de l'agent de broyage | 0,54 | 0,54 |
| Consommation en agent de broyage en % en poids sec/sec | 1,46 | 1,40 |
| pH du milieu de broyage | 9,2 | 9,2 |
| % substances minérales à 1 micron en fin de broyage | 79 | 79 |
| Température de broyage maintenue à: | 65°C | 65°C |
| Viscosité en cps à 20°C<br>—à la sortie du broyage<br>—après 24h de repos agitation préalable à la mesure<br>—après 8h jours de repos agitation préalable à la mesure | 300<br><br>280<br><br>270 | 450<br><br>440<br><br>550 |

Ce cinquième tableau révèle, par comparaison avec le tableau de l'exemple 1, la diminution très importante de la viscosité de la suspension de Carbonate de Calcium provenant d'une opération de broyage selon l'invention, c'est-à-dire réalisée en présence d'un agent de broyage constitué par du polymère acrylique partiellement neutralisé au moyen d'un mélange d'hydroxydes, l'un ayant une fonction monovalente, l'autre une fonction polyvalente.

Ce cinquième tableau révèle aussi l'importante amélioration de la viscosité de la suspension de Carbonate de Calcium grâce à la comparaison des essais 9 et 10 avec l'essai 2 aussi bien immédiatement à la sortie du broyage qu'après 24 heures et 8 jours de repos.

Grâce à l'agent de broyage selon l'invention, les suspensions de Carbonate de Calcium à haute concentration en matière sèche, acquièrent après broyage une viscosité très faible et stable dans le temps.

Exemple 6

Cet exemple, destiné à illustrer la variante, selon l'invention, concerne le broyage du même Carbonate de Calcium utilisé dans l'exemple 1 en présence d'un agent de broyage qui est un acide polyacrylique obtenu selon le même mode de polymérisation que dans l'essai n° 2 suivi d'une neutralisation partielle par l'hydroxyde de sodium selon un taux de 0,66 et extraction au moyen d'un solvant polaire (isopropanol) de la fraction du polymère acrylique de viscosité spécifique comprise entre 0,3 et 0,8.

Selon l'essai n° 11, la solution aqueuse de polymérisat étant partiellement neutralisée selon le taux 0,66 on prélevait un poids représentant 120 grammes de polymère sec dans 1046 grammes d'eau, on agitait avec 282 grammes d'isopropanol. Après séparation en deux phases par décantation, la phase la moins dense, comportant la majeure partie du solvant polaire et les fractions de polymère acrylique indésirables, était éliminée, tandis que la phase aqueuse la plus dense était recueillie et constituait la fraction du polymère acrylique ayant les qualités fondamentales d'un agent de broyage dont la viscosité spécifique était de 0,51.

Pour cet essai n° 11, on a alors préparé une suspension aqueuse de Carbonate de Calcium provenant due gisement d'Orgon (France) ayant une granulométrie inférieure à 43 microns.

La suspension aqueuse avait une concentration en matière sèche de 76% en poids par rapport à la masse totale.

12

L'agent de broyage était introduit dans cette suspension selon les quantités indiquées dans le tableau 6 ci-après, exprimées en pour cent en poids par rapport à la masse de Carbonate de Calcium à broyer.

La suspension à broyer était placée dans la même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 6 ci-après.

| TABLEAU 6 | ESSAI 11 |
|---|---|
| Substance minérale à broyer | $CaCO_3$ (urgonite) |
| Concentration en matière sèche de la suspension soumise au broyage | 76% |
| Agent de broyage<br><br>Taux de neutralisation | acide polyacrylique<br>0,66 |
| Milieu de polymérisation | eau et isopropanol |
| Viscosité spécifique de l'agent de broyage | 0,51 |
| Consommation en agent de broyage en % en poids sec/sec | 1,4 |
| pH du milieu de broyage | 9,2 |
| % substances minérales à 1 micron en fin de broyage | 78 |
| Température de broyage maintenue à: | 65°C |
| Viscosité en cps à 20°C<br>—à la sortie du broyage<br>—après 24h de repos agitation<br>   préalable à la mesure<br>—après 8h jours de repos agitation<br>   préalable à la mesure | 420<br><br>425<br><br>400 |

Ce tableau révèle, par comparaison avec le tableau de l'exemple 1, la diminution très importante de la viscosité de la suspension de Carbonate de Calcium provenant d'une opération de broyage selon l'invention, c'est-à-dire réalisée en présence d'un agent de broyage constitué par la fraction du polymère acide acrylique, partiellement neutralisé, isolée au moyen d'un solvant polaire, de viscosité spécifique après extraction, comprise entre 0,3 et 0,8.

Ce tableau révèle aussi l'exceptionelle amélioration de la viscosité de la suspension de Carbonate de Calcium grâce à la comparaison avec les essais 1 et 2 aussi bien immédiatement à la sortie du broyage qu'après 24 heures et 8 jours de repos.

Grâce à l'agent de broyage selon l'invention, les suspensions de Carbonate de Calcium à haute concentration en matière sèche, acquièrent après broyage une viscosité trés faible et vraiment stable dans le temps.

Exemple 7

Cet exemple, destiné à illustrer l'objet de l'invention concerne de broyage du même Carbonate de Calcium utilisé dans l'exemple 1, en présence d'un agent de broyage qui est un copolymère Acide Acrylique/Acrylate de Butyle dans le rapport 70/30 obtenu par polymérisation dans l'isopropanol, suivie d'une neutralisation partielle par l'Hydroxyde de Potassium selon un taux de 0,9. L'isopropanol est enfin éliminé par distillation et remplacé par l'eau.

Pour l'essai 12, on a alors préparé une suspension aqueuse de Carbonate de Calcium provenant du gisement d'Orgon (France) ayant une granulométrie inférieure à 43 microns.

. La suspension aqueuse avait une concentration en matière sèche de 76% en poids par rapport à la masse totale.

13

0 100 948

L'agent de broyage était introduit dans cette suspension selon les quantités indiquées dans le tableau 7 ci-après, exprimées en pour cent en poids par rapport à la masse de Carbonate de Calcium à broyer.

La suspension à broyer était placée dans le même broyeur que dans l'exemple 1, avec la même quantité de corps broyant et était traitée selon les mêmes critères expérimentaux, afin que les résultats obtenus puissent être comparés à ceux de l'exemple 1.

Tous les résultats expérimentaux sont consignés dans le tableau 7 ci-après.

| TABLEAU 7 | ESSAI 12 |
|---|---|
| Substance minérale à broyer | CaCO$_3$ (urgonite) |
| Concentration en matière sèche de la suspension soumise au broyage | 76% |
| Agent de broyage<br><br>Taux de neutralisation | Copolymère AA/ABu<br><br>0,9 |
| Milieu de polymérisation | isopropanol |
| Viscosité spécifique de l'agent de broyage | 0,525 |
| Consommation en agent de broyage en % en poids sec/sec | 1,17 |
| pH du milieu de broyage | 9,2 |
| % substances minérales à 1 micron en fin de broyage | 60 |
| Température de broyage maintenue à: | 65°C |
| Viscosité en cps à 20°C<br>—à la sortie du broyage<br>—après 24h de repos agitation préalable à la mesure<br>—après 8h jours de repos agitation préalable à la mesure | 650<br><br>720<br><br>950 |

Ce tableau révèle, par comparaison avec le tableau de l'exemple 1, la diminution de la viscosité de la suspension de Carbonate de Calcium provenant d'une opération de broyage selon l'invention, c'est-à-dire réalisée en présence d'un agent de broyage constitué par un copolymère acide acrylique-acrylate de butyle partiellement neutralisé par un agent monofonctionnel dans le rapport 0,9.

Exemple 8

Cet exemple, destiné à illustrer l'objet de l'invention concerne le broyage du même Carbonate de Calcium utilisé dans l'exemple 1, en présence d'un agent de broyage qui est un Polyacrylate de Sodium partiellement neutralisé obtenu par polymérisation de l'Acide Acrylique selon les mêmes procédés que ceux pratiqués par l'essai 2 de l'exemple 1.

Dans un essai n° 13, le broyage du Carbonate de Calcium a été pratiqué en présence d'acide polyacrylique obtenu selon le procédé de l'essai n° 2 de l'exemple 1, par polymérisation radicalaire de l'acide acrylique en un milieu aqueux en présence d'isopropanol, neutralisation partielle du polymérisat par de l'hydroxyde de sodium avec un taux de 0,5.

Dans un essai n° 14, le broyage du Carbonate de Calcium a été pratiqué en présence d'acide polyacrylique obtenu selon le procédé de l'essai n° 2 de l'exemple 1, par polymérisation radicalaire de l'acide acrylique en un milieu aqueux en présence d'isopropanol, neutralisation partielle du polymérisat par de l'hydroxyde de sodium avec un taux de neutralisation de 0,8.

Pour chacun des essais 13 et 14, on a alors préparé une suspension aqueuse de Carbonate de Calcium provenant du gisement d'Orgon (France) ayant une granulométrie inférieure à 43 microns.

La suspension aqueuse avait une concentration en matière sèche de 76% en poids par rapport à la masse totale.

14

L'agent de broyage était introduit dans cette suspension selon les quantités indiquées dans le tableau 8 ci-après, exprimées en pour cent en poids par rapport à la masse de Carbonate de Calcium à broyer.

La suspension à broyer était placée dans la même broyeur que dans l'exemple 1, avec la même quantité de corps broyant et était traitée selon les mêmes critères expérimentaux, afin que les résultats obtenus puissent être comparés à ceux de l'exemple 1.

| TABLEAU 8 | ESSAI 13 | ESSAI 14 |
|---|---|---|
| Substance minérale à broyer | $CaCO_3$ (urgonite) | $CaCO_3$ (urgonite) |
| Concentration en matière sèche de la suspension soumise au broyage | 76% | 76% |
| Agent de broyage | | |
| | Polyacrylique | Acide Polyacrylique |
| Taux de neutralisation | 0,5 de soude | 0,8 de soude |
| Milieu de polymérisation | eau et isopropanol | eau et isopropanol |
| Viscosité spécifique de l'agent de broyage | 0,54 | 0,54 |
| Consommation en agent de broyage en % en poids sec/sec | 1,8 | 1,25 |
| pH du milieu de broyage | 9,2 | 9,2 |
| % substances minérales à 1 micron en fin de broyage | 78 | 79 |
| Température de broyage maintenue à: | 65°C | 65°C |
| Viscosité en cps à 20°C —à la sortie du broyage —après 24h de repos agitation préalable à la mesure —après 8h jours de repos agitation préalable à la mesure | 400 430 410 | 550 630 730 |

Ce huitième tableau révèle, par comparaison avec le tableau de l'exemple 1, la diminution de la viscosité de la suspension de Carbonate de Calcium provenant d'une opération de broyage selon l'invention, c'est-à-dire réalisée en présence d'un agent de broyage constitué par un polymère de l'acide acrylique partiellement neutralisé par l'hydroxyde de sodium à des taux de 0,5 pour l'essai 13 et 0,8 pour l'essai 14.

**Revendications**

1. Agent de broyage en suspension aqueuse de matériaux minéraux grossiers destinés à des applications pigmentaires contenant une fraction des polymères et/ou copolymères acryliques acides, ayant une viscosité spécifique η comprise entre 0,3 et 0,8, ladite viscosité étant mesurée sur le polymère et/ou le copolymère complètement neutralisé, caractérisé en ce que cet agent est formé de ladite fraction des polymères et/ou copolymères partiellement neutralisés jusqu'à un taux de neutralisation compris entre 0,40 et 0,96 par au moins un agent de neutralisation disposant d'au moins une fonction monovalente.

2. Agent de broyage selon la revendication 1, caractérisé en ce que la neutralisation partielle desdits polymères et/ou copolymères acides est réalisée jusqu'à un taux de neutralisation compris entre 0,50 à 0,75.

3. Agent de broyage selon les revendications 1 et 2, caractérisé en ce que l'agent de neutralisation monovalent est choisi dans le group constitué par les cations alcalins, l'ammonium et les amines aliphatiques et/ou cycliques.

4. Agent de broyage selon les revendications 1 et 2, caractérisé en ce que l'agent de neutralisation est à fonction polyvalente.

5. Agent de broyage selon la revendication 4, caractérisé en ce que l'agent de neutralisation à fonction polyvalente est choisi dans le groupe constitué par les cations alcalino-terreux, le zinc et l'aluminium.

6. Agent de broyage selon l'une quelconque des revendications 1 à 5 caractérise en ce que l'agent de neutralisation dispose simultanément d'au moins deux fonctions monovalentes.

7. Agent de broyage selon l'une quelconque des revendications 1 à 5 caractérise en ce que l'agent de neutralisation dispose simultanément d'au moins deux fonctions polyvalentes.

8. Agent de broyage selon l'une quelconque des revendications 1 à 5 caractérise en ce que l'agent de neutralisation est constitué par le mélange d'au moins un agent de neutralisation disposant d'au moins une fonction monovalente avec au moins un agent de neutralisation disposant d'une fonction polyvalente.

9. Agent de broyage selon l'une quelconque des revendications 1 à 8 caractérise en ce que ledit agent résulte de la polymérisation ou copolymérisation de l'un au moins des monomères et/ou comonomères constitué par le groupe des acides acrylique, méthacrylique, itaconique, crotonique, fumarique et anhydride maléique.

10. Procédé de broyage en suspension aqueuse de matériaux minéraux, destiné à des applications pigmentaires consistant à préparer une suspension aqueuse de ces matériaux, à introduire un agent de broyage choisi parmi kes polymères et/ou copolymères acryliques, à ajouter à la suspension un corps broyant et à soumettre le mélange ainsi réalisé à une action mécanique de brassage, caractérisé en ce que l'on utilise l'agent de broyage selon l'une quelconque des revendications 1 à 9.

11. Procédé de broyage selon la revendication 10 caractérisé en ce que la suspension aqueuse de matériaux minéraux à broyer comporte au moins 70% en poids de matières sèches.

12. Procédé de broyage selon la revendication 10 caractérisé en ce que l'agent de broyage est introduit au sein de la suspension à raison de 0,2% à 2% en poids de la fraction séchée dudit polymère par rapport à la masse de la substance minérale à broyer.

13. Procédé de broyage selon la revendication 10 caractérisé en ce que le corps broyant se présente sous la forme de particules granuleuses dont la granulométrie est comprise entre 0,2 et 4 millimètres.

14. Procédé de broyage selon la revendication 10 caractérisé en ce que le corps broyant est un oxyde de silicium, oxyde d'aluminium, oxyde de zirconium ou de leurs mélanges, les aciers, ainsi que des résines synthétiques de haute dureté.

15. Procédé de broyage selon la revendication 10 caractérisé en ce que le corps broyant est ajouté à la suspension aqueuse en une quantité telle que le rapport poids entre le matériau de broyage et la substance minérale à broyer est d'au moins 2/1, ce rapport étant de préférence compris entre 3/1 et 5/1.

## Patentansprüche

1. Hilfsmittel zum Mahlen grobkörniger mineralischer Stoffe bestimmt für Pigmentierungsanwendungen in wässriger Suspension, enthaltend eine Fraktion polymerer und/oder copolymerer acrylischer Säuren, die eine spezifische Viskosität $\eta$ zwischen 0,3 und 0,8 haben, wobei diese Viskosität an dem völlig neutralisierten Polymeren und/oder Copolymeren gemessen wird, dadurch gekennzeichnet, daß das Hilfsmittel aus der genannten Fraktion der teilweise neutralisierten Polymeren und/oder Copolymeren, die bis zu einem Neutralisationsgrad zwischen 0,4 und 0,96 mittels eines Neutralisationsagens mit mindestens einer monovalenten Funktion neutralisiert sind, gebildet wird.

2. Mahlhilfsmittel nach Anspruch 1, dadurch gekennzeichnet, daß die teilweise Neutralisation der genannten polymeren und/oder copolymeren Säuren bis zu einem Neutralisationsgrad zwischen 0,5 und 0,75 durchgeführt wird.

3. Mahlhilfsmittel nach den Ansprüchen 1 und 2, dadurch gekennzeichnet, daß das monovalente Neutralisationsagens aus der Gruppe aus Alkalikationen, Ammoniak und den aliphatischen und/oder cyclischen Aminen ausgewählt wird.

4. Mahlhilfsmittel nach den Ansprüchen 1 und 2, dadurch gekennzeichnet, daß das Neutralisationsagens polyvalente Funktion besitzt.

5. Mahlhilfsmittel nach Anspruch 4, dadurch gekennzeichnet, daß das Neutralisationsagens mit polyvalenter Funktion aus der Gruppe aus Erdalkalikationen, Zink und Aluminium ausgewählt wird.

6. Mahlhilfsmittel nach einem der vorhergehenden Ansprüche 1 bis 5, dadurch gekennzeichnet, daß das Neutralisationsagens gleichzeitig über wenigstens zwei monovalente Funktionen verfügt.

7. Mahlhilfsmittel nach einem der vorhergehenden Ansprüche 1 bis 5, dadurch gekennzeichnet, daß das Neutralisationsagens gleichzeitig über mindestens zwei polyvalente Funktionen verfügt.

8. Mahlhilfsmittel nach einem der vorhergehenden Ansprüche 1 bis 5, dadurch gekennzeichnet, daß das Neutralisationsagens aus einer Mischung von mindestens einem Neutralisationsagens mit einer monovalenten Funktion und mindestens einem Neutralisationsagens mit einer polyvalenten Funktion besteht.

9. Mahlhilfsmittel nach einem der vorhergehenden Ansprüche 1 bis 8, dadurch gekennzeichnet, daß das genannte Agens aus der Polymerisation oder Copolymerisation mindestens eines der Monomeren

0 100 948

und/oder Comonomeren aus der Gruppe aus Acryl-, Methacryl-, Itacon-, Croton-, Fumarsäure und Maleinsäureanhydrid hervorgeht.

10. Verfahren zum Mahlen mineralischer Stoffe in wässriger Suspension, die bestimmt sind für Pigmentierungsanwendungen bestehend aus

— Herstellen einer wässrigen Suspension dieser Stoffe,

— Einführen eines Mahlhilfsmittels ausgewählt aus den acrylischen Polymeren und/oder Copolymeren,

— Hinzufügen eines Mahlkörpers zu der Suspension, und

— Unterwerfen der so gewonnenen Mischung unter einen mechanischem Rührvorgang, dadurch gekennzeichnet, daß man ein Mahlhilfsmittel gemäß einem der vorhergehenden Ansprüche 1 bis 9 verwendet.

11. Mahlverfahren nach Anspruch 10, dadurch gekennzeichnet, daß die zu mahlende wässrige Suspension mineralischer Stoffe mindestens 70% Trockensubstanz enthält.

12. Mahlverfahren nach Anspruch 10, dadurch gekennzeichnet, daß das Mahlhilfsmittel in einer Menge von 0,2 bis 2 Gew.% des Trockenanteils des genannten Polymeren, bezogen auf die Masse der zu mahlenden mineralischen Substanz, in die Suspension eingesetzt wird.

13. Verfahren zum Mahlen nach Anspruch 10, dadurch gekennzeichnet, daß der Mahlkörper in Form von körnigen Teilchen vorliegt, deren Teilchengröße zwischen 0,2 und 4 mm liegt.

14. Mahlverfahren nach Anspruch 10, dadurch gekennzeichnet, daß der Mahlkörper aus einem Siliciumoxid, Aluminiumoxid, Zirkoniumoxid oder deren Mischungen, aus Stahl sowie Kunstharzen von hoher Härte besteht.

15. Mahlverfahren nach Anspruch 10, dadurch gekennzeichnet, daß der Mahlkörper der wässrigen Suspension in einer solchen Menge zugesetzt wird, daß das Gewichtsverhältnis zwischen dem Mahlmaterial und der zu mahlenden mineralischen Substanz mindestens 2/1 beträgt, wobei das Verhältnis vorzugsweise zwischen 3/1 und 5/1 liegt.


**Claims**

1. Grinding agent in an aqueous suspension of coarse mineral materials intended for use as pigments containing a fraction of acrylic acid polymers and/or copolymers, having a specific viscosity η comprised between 0.3 and 0.8, the said viscosity being measured on the completely neutralised polymer and/or copolymer, characterised in that this agent is formed by the said fraction of polymers and/or copolymers partially neutralised up to a rate of neutralisation comprised between 0.40 and 0.96 by at least one neutralisation agent having at least one monovalent function.

2. Grinding agent according to Claim 1, characterised in that the partial neutralisation of the said acid polymers and/or copolymers is carried out up to a rate of neutralisation comprised between 0.50 and 0.75.

3. Grinding agent according to Claims 1 and 2, characterised in that the monovalent neutralisation agent is selected in the group constituted by the alkaline cations, ammonia and the aliphatic and/or cyclic amines.

4. Grinding agent according to Claims 1 and 2, characterised in that the neutralisation agent is of polyvalent function.

5. Grinding agent according to Claim 4, characterised in that the neutralisation agent of polyvalent function is selected in the group constituted by the cations of alkaline earths, zinc and aluminium.

6. Grinding agent according to any one of Claims 1 to 5, characterised in that the neutralisation agent simultaneously has at least two monovalent functions.

7. Grinding agent according to any one of Claims 1 to 5, characterised in that the neutralisation agent simultaneously has at least two polyvalent functions.

8. Grinding agent according to any one of Claims 1 to 5, characterised in that the neutralisation agent is constituted by the mixture of at least one neutralisation agent having at least one monovalent function with at least one neutralisation agent having a polyvalent function.

9. Grinding agent according to any one of Claims 1 to 8, characterised in that the said agent results from the polymerisation or copolymerisation of one at least of the monomers and/or comonomers constituted by the following group of acids: acrylic, methacrylic, itaconic, crotonic, furmaric and maleic anhdyride.

10. Process of grinding in an aqueous suspension of mineral materials, intended for use as pigments consisting of preparing an aqueous suspension of these materials, of introducing a grinding agent selected from the acrylic polymer and/or copolymers, of adding to the suspension a grinding substances and of subjecting the mixture thus formed to a mechanical stirring action, characterised in that the grinding agent according to any of Claims 1 to 9 is used.

11. Process of grinding according to Claim 10, characterised in that the aqueous suspension of mineral materials to be ground comprises at least 70% by weight of dry matter.

12. Process of grinding according to Claim 10, characterised in that the grinding agent is introduced to the core of the suspension at the rate of 0.2% to 2% by weight of the dried fraction of the said polymer in relation to the mass of the mineral substance to be ground.

13. Process of grinding according to Claim 10, characterised in that the grinding substance takes the form of granular particles, the granulometry of which is comprised between 0.2 and 4 millimetres.

14. Process of grinding according to Claim 10, characterised in that the grinding substance is an oxide of silicon, oxide of aluminium, oxide or zirconium or mixtures thereof, steels, and also synthetic resins of a high degree of hardness.

15. Process of grinding according to Claim 10, characterised in that the grinding substance is added to the aqueous suspension in a quantity such that the weight ratio between the grinding material and the mineral substance to be ground is at least 2/1, this ratio being preferably comprised between 3/1 and 5/1.